# EUROPEAN PATENT SPECIFICATION

(11) **EP 3 978 217 B1**
(45) Date of publication and mention of the grant of the patent: **29.03.2023**
(21) Application number: 21275135.8
(22) Date of filing: 27.09.2021
(51) Int. Cl.: B29C 45/42, B29C 45/76, H04N 7/18

(54) **TEACHING METHOD FOR SYSTEM FOR TAKING OUT MOLDED PRODUCT AND APPARATUS FOR TAKING OUT MOLDED PRODUCT**
LEHRVERFAHREN FÜR SYSTEM ZUM HERAUSNEHMEN GEFORMTES PRODUKT UND GERÄTE ZUM ENTNEHMEN AUSGEFORMTES PRODUKT
PROCEDE D'ENSEIGNEMENT POUR SYSTEME DE SORTIE PRODUIT MOULÉ ET APPAREIL À PRENDRE PRODUIT MOULÉ

(30) Priority: 30.09.2020 JP 2020164907
(43) Date of publication of application: 06.04.2022
(73) Proprietor: Yushin Precision Equipment Co. , Ltd., Kyoto (JP)
(72) Inventor: WATANABE, Fumitake, Minami-ku, Kyoto (JP); ANDO, Kazutaka, Minami-ku, Kyoto (JP)
(74) Representative: Wilson Gunn

(56) References cited:
- US-A1- 2018 253 860

## Description

### TECHNICAL FIELD

The present invention relates to a teaching method for a system for taking out a molded product, and to the system for taking out a molded product.

### BACKGROUND ART

An apparatus for taking out a molded product repeatedly performs operation to take out a molded product at a product take-out position in a die of a molding apparatus using a take-out head (an attachment), and release the molded product at a product release position outside the molding apparatus. The operation of a take-out robot is taught by a so-called teaching program. To suction the molded product, it is normally necessary to perform teaching so as to bring a take-out head, which is mounted to the distal end of an approach frame of the apparatus for taking out a molded product, closer to the die by positioning the take-out head in three directions, that is, a lateral direction (a direction that is orthogonal to the direction in which the die is opened and closed and the up-down direction), a pull-out direction (the direction in which the die is opened and closed), and the up-down direction. When the attachment mounted to the distal end of the approach frame is advanced into the die, the positional relationship between the attachment and the die cannot be accurately grasped if the distance between the attachment and the die is long. Therefore, it has been necessary to check if the approach frame and the die do not interfere with each other by moving the approach frame in the travel direction and reducing the distance between the attachment and the die, in order to grasp the positional relationship between the attachment and the die. For example, when it is found that the approach frame interferes with the die while the approach frame is lowered, it is necessary to move the approach frame in the pull-out direction or the lateral direction and change the coordinate of the teaching position immediately before the lowering, which is troublesome. In addition, the attachment and the die occasionally collide with each other while this operation is performed.

Therefore, in the related art, the positioning depends on the skills of an operator, who often aligns the positioning relationship between the die and the attachment by viewing the positioning relationship between the die and the attachment in the lateral direction of the molding apparatus. In such a teaching method, however, the operator makes full use of his/her intuition to grasp whether or not the attachment is faced i7n the right travel direction, which increases the operation time. The teaching method also depends on the skills of the operator.

Japanese Unexamined Patent Application Publication No. 2018-114752 describes a teaching method for a system for taking out a molded product, the system including a plurality of imaging devices configured to capture images around a fixed frame and images around moving frames and an image display device configured to display an integrated captured image obtained by integrating the images (including both moving images and still images) captured by the plurality of imaging devices, the teaching method including an operator performing teaching of an operation sequence while viewing the integrated captured image displayed on the image display device.

[Patent Document 1] Japanese Unexamined Patent Application Publication No. 2018-114752

### SUMMARY OF INVENTION

### TECHNICAL PROBLEM

In the technique described in Patent Document 1, however, a plurality of imaging devices are required, and it is difficult to accurately grasp whether or not the attachment mounted to the approach frame and the die interfere with each other through visual observation when the attachment is advanced into the die while viewing the integrated captured image.

An object of the present invention is to provide a teaching method for a system for taking out a molded product and a system for taking out a molded product, the system being configured to visually display, using a single imaging device, the range in which an attachment mounted to an approach frame, including the approach frame, is to be lowered before the attachment is lowered into a die, and to make it easy to correct the position of the attachment if the attachment interferes with the die.

### SOLUTION TO PROBLEM

The present invention performs teaching for a system for taking out a molded product, the system including: a fixed frame; a movable frame movable along the fixed frame; an approach frame including an attachment such as a take-out head and movably held on the movable frame to go into a die of a molding apparatus; an operation control section configured to move the movable frame and the approach frame according to a predetermined operation sequence to take out the molded product from the die of the molding apparatus with the die being opened, and to carry the molded product to a predetermined position and release the molded product; an imaging device disposed to capture an image of the die and around the die; and an image display device configured to display the captured image, which is captured by the imaging device, on a display screen of a display section. The operation control section includes a teaching execution section configured to enable an operator to execute teaching of the operation sequence by changing a position of the approach frame while viewing the captured image displayed on the image display device. The teaching method for a system for taking out a molded product according to the present invention includes: disposing the imaging device so as to be able to capture an image of the die and around the die in a direction in which the approach frame approaches the die that is opened, and so as to be able to define, in the captured image, a virtual plane including an image of an opening end surface of the die that is opened; preparing a projected image obtained by projecting the attachment onto the virtual plane, or a maximum-dimension virtual projected image of the projected image, based on three-dimensional position information and three-dimensional shape information on the attachment that is mounted to the approach frame; and displaying by the image display device, on the display screen, the projected image or the maximum-dimension virtual projected image as is superposed on the captured image.

With the method according to the present invention, the projected image obtained by projecting the attachment mounted to the approach frame onto the virtual plane, or the maximum-dimension virtual projected image of the projected image, is displayed as is superposed on the virtual plane, the virtual plane including the captured image of the opening end surface of the die that is opened, the captured image being captured by the single imaging device in a direction in which the approach frame approaches the die that is opened, before the attachment is advanced into the die. Thus, an area within the range of the die that is opened in which the attachment is to be lowered can be checked through visual observation. As a result, it is possible to correct the teaching position of the attachment before the attachment actually interferes with the die.

The image display device may display, on the virtual plane, an indicator for determining a dimension ratio between the captured image and the projected image or the maximum-dimension virtual projected image together with the captured image. With such a configuration, the position correction amount for avoiding interference of the attachment with the die can be roughly determined from information obtained by viewing the display of the indicator.

The indicator may include grid scales extending at constant intervals in a lateral direction and a vertical direction of the virtual plane, for example. Use of such an indicator enhances the precision in determining the correction amount.

The teaching execution section may be configured to output an alarm signal to stop operation of the approach frame if the projected image or the maximum-dimension virtual projected image overlaps a part of the image of the opening end surface of the die that is opened, when the projected image or the maximum-dimension virtual projected image is displayed as is superposed on the captured image. With such a configuration, interference between the die and the attachment can be automatically prevented using an alarm signal.

The system for taking out a molded product according to the present invention uses the method according to the present invention. The system of the preset invention comprises a fixed frame; a movable frame movable along the fixed frame; an approach frame including an attachment such as a take-out head and movably held on the movable frame to go into a die of a molding apparatus; an operation control section configured to move the movable frame and the approach frame according to a predetermined operation sequence to take out the molded product from the die of the molding apparatus with the die being opened, and to carry the molded product to a predetermined position and release the molded product; an imaging device disposed to capture an image of the die and around the die; and an image display device configured to display the captured image, which is captured by the imaging device, on a display screen of a display section. The operation control section includes a teaching execution section configured to enable an operator to execute teaching of the operation sequence by changing a position of the approach frame while viewing the captured image displayed on the image display device. The imaging device is disposed so as to be able to capture an image of the die and around the die that is opened in a direction in which the approach frame approaches the die that is opened, and so as to be able to define, in the captured image, a virtual plane including an image of an opening end surface of the die that is opened. The image display device includes a projected image preparation section configured to prepare a projected image obtained by projecting the attachment onto the virtual plane, or a maximum-dimension virtual projected image of the projected image, based on three-dimensional position information and three-dimensional shape information on the attachment that is mounted to the approach frame. The image display device is configured to display, on the display screen, the projected image or the maximum-dimension virtual projected image as is superposed on the captured image captured by the imaging device.

### BRIEF DESCRIPTION OF DRAWINGS

Fig. 1 is a perspective view illustrating a state in which an apparatus for taking out a molded product according to an embodiment is mounted on a fixed platen of a molding apparatus.
Fig. 2 illustrates an example of an image captured by an imaging device.
Fig. 3A illustrates a virtual plane including an open end surface of a die, Fig. 3B is a schematic view of a captured image including an image of the virtual plane, and Fig. 3C illustrates an indicator with a different pattern.
Fig. 4 illustrates the center of an imaging range.
Fig. 5 illustrates a pair of symmetric structure portions.
Fig. 6 is a block diagram illustrating the configuration of a control system of the apparatus for taking out a molded product for use in the present embodiment.

### DESCRIPTION OF EMBODIMENTS

A system for taking out a molded product according to an embodiment of the present invention and a teaching method for the system will be described in detail below with reference to the drawings.

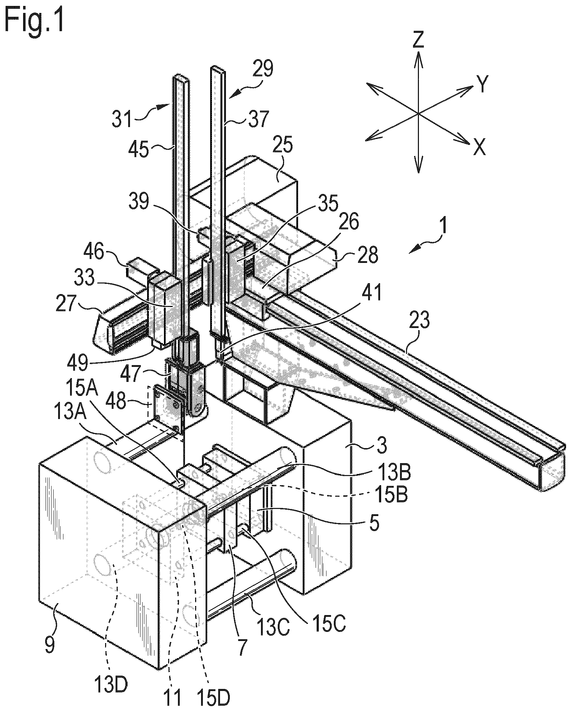

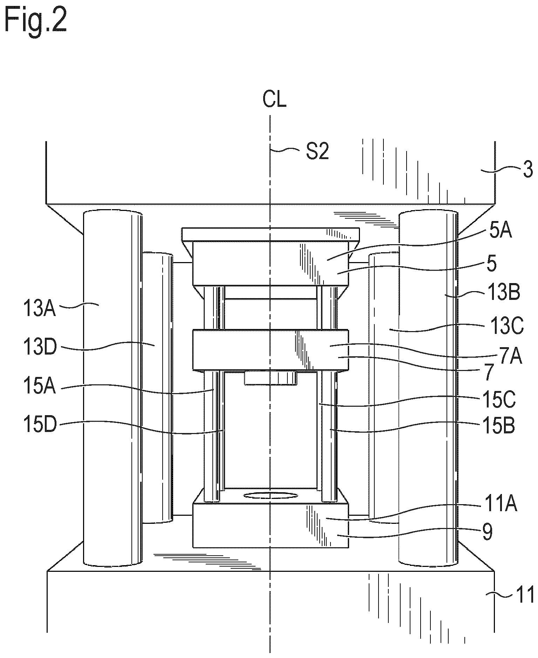

Fig. 1 is a perspective view illustrating a state in which an apparatus 1 for taking out a molded product according to an embodiment is mounted on a fixed platen 3 of a molding apparatus. In Fig. 1, a die plate portion of the molding apparatus is extracted and illustrated as being partially transparent. Fig. 2 illustrates an example of an image captured by an imaging device 49 to be discussed later. A fixed die 5 and an intermediate die 7 are fixed to the fixed platen 3 of the molding apparatus. A movable die 11 is fixed to a movable platen 9. Four tie bars 13A to 13D are disposed or extended between the fixed platen 3 and the movable platen 9 to guide movement of the movable platen 9. The four tie bars 13A to 13D are disposed at equal intervals. A virtual center line that passes through the center of the four tie bars 13A to 13D passes through the center (nozzle center) of the fixed die 5 and the movable die 11. The fixed die 5, the intermediate die 7, and the movable die 11 are guided by guide pins 15A to 15D. The four guide pins 15A to 15D are also disposed at equal intervals. A virtual center line that passes through the center of the four guide pins 15A to 15D also passes through the center (nozzle center) of the fixed die 5 and the movable die 11.

The apparatus 1 includes a lateral frame 23, a control box 25, a pull-out frame 27, a runner elevating unit 29, and a molded product-suctioning elevating unit 31. The lateral frame 23 has a cantilever beam structure in which the lateral frame 23 extends in the X-axis direction which is horizontal and orthogonal to the longitudinal direction of the molding apparatus (not illustrated). The control box 25 is supported by the lateral frame 23. A travelling body 26 is advanced and retracted in the X-axis direction along the lateral frame 23 by a drive source formed by an AC servomotor (not illustrated) included in a servomechanism. The base portion of the pull-out frame 27, which is a movable frame, is mounted to the travelling body 26. The pull-out frame 27 extends in the Y-axis direction which is parallel to the longitudinal direction of the molding apparatus. The runner elevating unit 29 and the molded product-suctioning elevating unit 31 are supported by the pull-out frame 27 via travelling bodies 35 and 33 to be movable in the Y-axis direction by a drive source formed by an AC servomotor (not illustrated) included in a servomechanism. A pull-out relay box 28 is mounted to the base portion of the pull-out frame 27.

The runner elevating unit 29 includes an elevating frame 37 provided on the travelling body 35, which is movably supported by the pull-out frame 27, to be elevated and lowered in the Z-axis direction. The travelling body 35 is movable in the Y-axis direction when the travelling body 35 is driven by the AC servomotor (not illustrated). The elevating frame 37 is elevated and lowered in the up-down direction (Z-axis direction) by an AC servomotor 39. The elevating frame 37 includes a chuck 41 that serves as an attachment for holding a runner to be wasted.

The travelling body 33 which is included in the molded product-suctioning elevating unit 31 is moved in the Y-axis direction on the pull-out frame 27 by the AC servomotor (not illustrated). The molded product-suctioning elevating unit 31 includes an elevating frame 45 that serves as an approach frame to be elevated and lowered in the up-down direction (Z-axis direction) by an AC servomotor 46, and a reverse unit 47 provided at the lower end of the elevating frame 45 to serve as an attachment mounting portion that constitutes a posture controller. A take-out head 48 indicated by the broken line is mounted to the reverse unit 47. In the present embodiment, the reverse unit 47 (attachment mounting portion) and the take-out head 48 constitute an attachment. The pull-out frame 27 is moved in the transverse direction along the lateral frame 23 which extends in the lateral direction (X-axis direction). The elevating frames 37 and 45 which are moved in the front-rear direction (Y-axis direction), which is orthogonal to the up-down direction (Z-axis direction) and the lateral direction, are mounted to the pull-out frame 27 to be movable in the front-rear direction.

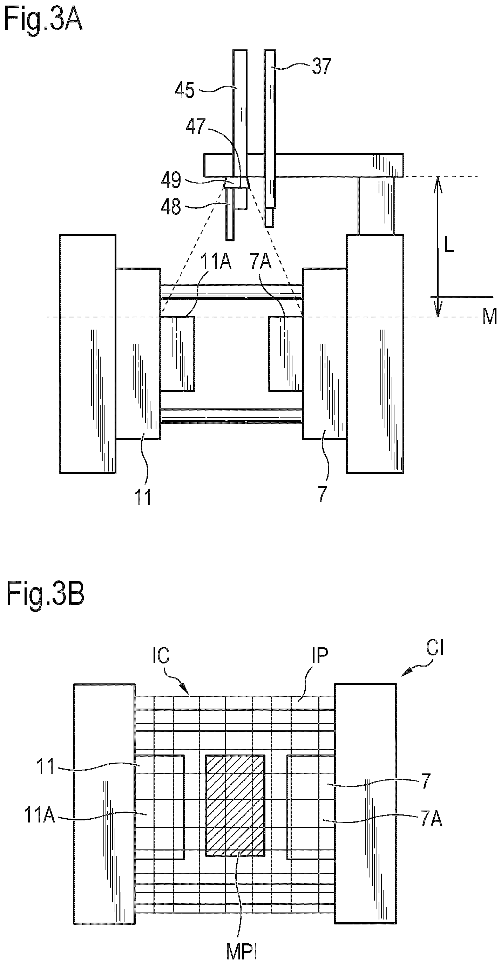

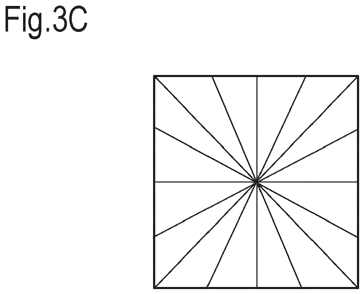

In the present embodiment, an imaging device 49 as a camera for monitoring is installed on the lower surface of the travelling body 33. The imaging device 49 is disposed so as to be able to capture an image of the die (5, 7, 11) and around the die (5, 7, 11) that is opened in a direction in which the elevating frame 37, 45 (approach frame) approaches the die (5, 7, 11) that is opened, and so as to be able to define, in the captured image, a virtual plane IP including an image of an opening end surface (5A, 7A, 11A) of the die (5, 7, 11) that is opened. Fig. 3A illustrates the virtual plane IP including the opening end surface (5A, 7A, 11A) of the die. Fig. 3B is a schematic view of a captured image CI including an image of the virtual plane IP. In Fig. 3B, an indicator IG constituted from grid scales extending at constant intervals in a lateral direction W and a vertical direction D of the virtual plane IP is displayed on the displayed virtual plane IP together with the captured image CI. Such display of the indicator IG facilitates determining the dimension ratio between the captured image CI and a projected image PI or a maximum-dimension virtual projected image MPI, which is a projected image which has a maximum dimension. The position correction amount for avoiding interference of the attachment with the die can be roughly determined from information obtained by viewing the display of the indicator IG. Fig. 3C illustrates an indicator with a different pattern. This pattern allows easily recognizing the degree of tilt of the projected image PI with respect to the captured image of the die.

In the example in Fig. 3A, the imaging device 49 is located directly above the die. Even if the imaging device 49 is not located directly above the die and an image is captured in an oblique direction, however, a virtual plane IP including an image of the opening end surface (5A, 7A, 11A) of the die (5, 7, 11) that is opened can be defined in the captured image CI. In Figs. 3A and 3B, two-plate dies (7, 11) are used, unlike the present embodiment.

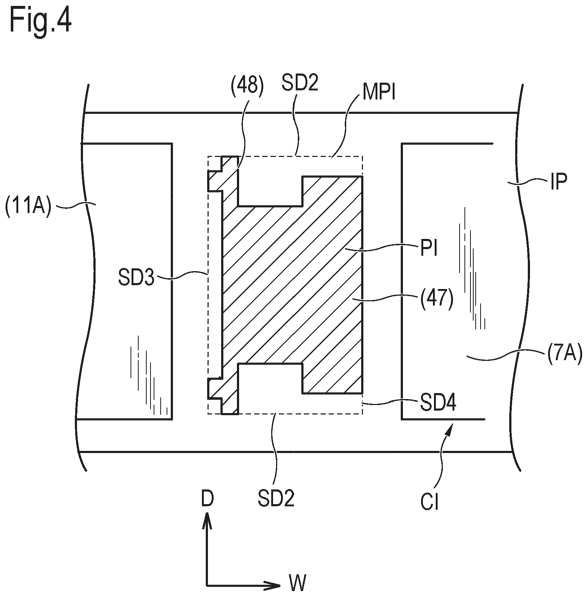

In the present embodiment, a projected image PI obtained by projecting the attachment (47, 48) onto the virtual plane IP, or a maximum-dimension virtual projected image MPI of the projected image PI, is prepared based on three-dimensional position information and three-dimensional shape information on the attachment (47, 48) that is mounted to the elevating frame 45 (approach frame), for example. The projected image PI or the maximum-dimension virtual projected image MPI is displayed as is superposed on the captured image CI. Fig. 3B illustrates a state in which the maximum-dimension virtual projected image MPI is displayed as is superposed on the captured image CI. Fig. 4 illustrates an example of a state in which the projected image PI of the attachment (47, 48) and the maximum-dimension virtual projected image MPI (an image on the frame indicated by the broken line) are displayed as are superposed on the captured image CI projected onto the virtual plane IP. In practice, one of the projected image PI and the maximum-dimension virtual projected image MPI is displayed on the virtual plane IP.

The three-dimensional position information on the attachment (47, 48) that is used to prepare the projected image PI and the maximum-dimension virtual projected image MPI includes a distance L (position of the imaging device 49) and position information M on the virtual plane IP in Fig. 3A. Among these pieces of information, the distance L can be obtained using an optical position sensor or an encoder, for example. The position information M can be obtained through advance measurement. Further, information on an angle 0 between the imaging device 49 and the virtual plane IP can be obtained through computation based on an initial value measured in advance and the position information on the imaging device 49. The three-dimensional shape information on the attachment (47, 48) can be obtained from design information or CAD information on the reverse unit 47 (attachment mounting portion) and the take-out head 48. By obtaining these pieces of information in advance, it is possible to prepare the projected image PI or the maximum-dimension virtual projected image MPI to be displayed on the virtual plane IP discussed earlier using a known computer graphics technique.

The maximum-dimension virtual projected image MPI of the attachment is a virtual frame-shaped or rectangular image having sides SD1 to SD4 extending in the lateral direction W and the vertical direction D, the lengths of the sides SD1 to SD4 corresponding to the maximum dimension, in the lateral direction W and the vertical direction D, of the projected image PI of the attachment (47, 48), which is mounted to the elevating frame 45 (approach frame), on the virtual plane IP.

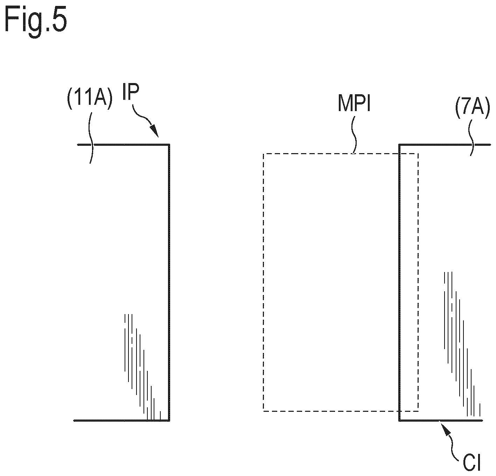

It is possible to visually check the range of the die 7, 11, which is open, in which the attachment (47, 48) mounted to the elevating frame 45 is to be lowered, by displaying the maximum-dimension virtual projected image MPI of the projected image obtained by projecting the attachment (47, 48) onto the virtual plane IP including the captured image CI of the opening end surface 7A, 11A of the die 7, 11 captured by the single imaging device 49, as illustrated in Fig. 5, before the attachment (47, 48) is advanced into the die (7, 11) that is opened. As a result, it is possible to correct the teaching position of the attachment (47, 48) before the attachment (47, 48) actually interferes (collides) with the die 7, 11.

### [Block Diagram of Control System]

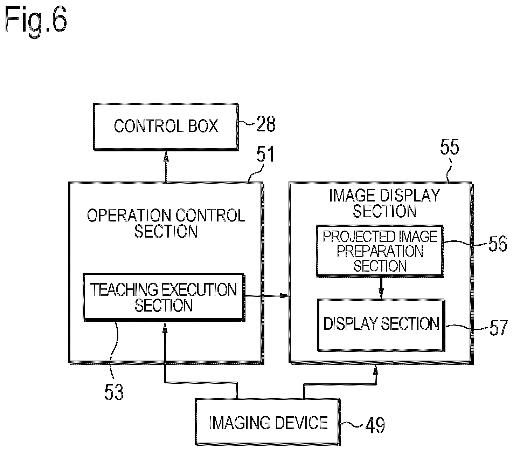

Fig. 6 is a block diagram illustrating the configuration of a control system of the apparatus for taking out a molded product for use in the present embodiment. As illustrated in the drawing, the control system includes the imaging device 49, an operation control section 51, and an image display device 55 that includes a display section 57. The operation control section 51 transmits a control command to the control box 25 and the pull-out relay box 28 according to an operation sequence. In addition, the operation control section 51 according to the present embodiment includes a teaching execution section 53 that enables teaching of the operation sequence by changing the position of the elevating frame 45, which constitutes the approach frame, while the operator is viewing the captured image displayed on the display section 57 of the image display device 55. The image display device 55 also includes a projected image preparation section 56 configured to prepare a projected image PI obtained by projecting the attachment (47, 48) onto the virtual plane IP, or a maximum-dimension virtual projected image MPI of the projected image PI, based on three-dimensional position information and three-dimensional shape information on the attachment (the reverse unit 47 as the attachment mounting portion and the take-out head 48) that is mounted to the elevating frame 45 (approach frame). The image display device 55 is configured to display, on a display screen, the projected image PI or the maximum-dimension virtual projected image MPI as is superposed on the captured image CI captured by the imaging device 49.

To implement the method according to the present invention using such a system, a projected image PI obtained by projecting the attachment (47, 48) mounted to the elevating frame 45 (approach frame) onto the virtual plane IP, or a maximum-dimension virtual projected image MPI of the projected image PI, is displayed as is superposed on the virtual plane IP, the virtual plane IP including the captured image CI of the opening end surface (7A, 11A) of the die (47, 48) that is opened, the captured image CI being captured by the single imaging device 49 in a direction in which the elevating frame 45 approaches the die (7, 11) that is opened, before the attachment (47, 48) is advanced into the die (7, 11). Then, the range of the die (7, 11) that is opened in which the attachment (47, 48) is to be lowered is checked through visual observation. The teaching position of the attachment (47, 48) is corrected when it is determined that the attachment (47, 48) is to interfere (collide) with the die 7, 11. This correction is performed by the teaching execution section 53. The other teaching is also performed by the teaching execution section 53.

### [Modifications]

In the embodiment described above, the present invention is applied to a system for taking out a molded product in the up-down direction. As a matter of course, however, the present invention is also applicable to a system for taking out a molded product in the lateral direction from a molding apparatus.

The imaging device 49 may be disposed on an existing apparatus for taking out a molded product, and an existing controller or mobile communication terminal device may be used as the image display device. With this configuration, the method according to the present invention is also applicable to the existing apparatus for taking out a molded product.

The imaging device 49 may be provided to be removable or changeable in the mount position. Consequently, the imaging device can be removed or adjusted in position if the imaging device constitutes an obstruction. When teaching is finished, the imaging device can be tilted at a stroke in the pull-out direction to be used to monitor the surroundings.

### INDUSTRIAL APPLICABILITY

With the method according to the present invention, a projected image obtained by projecting the attachment mounted to the approach frame onto the virtual plane, or a maximum-dimension virtual projected image of the projected image, is displayed as is superposed on the virtual plane, the virtual plane including the captured image of the opening end surface of the die that is opened, the captured image being captured by the single imaging device in a direction in which the approach frame approaches the die that is opened, before the attachment is advanced into the die. Thus, the range of the die that is opened in which the attachment is to be lowered can be checked through visual observation. As a result, it is possible to correct the teaching position of the attachment before the attachment actually interferes with the die.

## Claims

1. A teaching method for a system for taking out a molded product, the system comprising:
a fixed frame (23);
a movable frame (27) movable along the fixed frame (23);
an approach frame (45) including an attachment such as a take-out head (48) and movably held on the movable frame (27) to go into a die (5,7,11) of a molding apparatus;
an operation control section (51) configured to move the movable frame (27) and the approach frame (45) according to a predetermined operation sequence to take out the molded product from the die of the molding apparatus with the die being opened, and to carry the molded product to a predetermined position and release the molded product;
an imaging device (49) disposed to capture an image of the die and around the die; and
an image display device (55) configured to display the captured image, which is captured by the imaging device (49), on a display screen of a display section (57),
the operation control section (51) including a teaching execution section configured to enable an operator to execute teaching of the operation sequence by changing a position of the approach frame (45) while viewing the captured image displayed on the image display device (55), **characterized in that**:
the teaching method comprises:
disposing the imaging device (49) so as to be able to capture an image of the die and around the die in a direction in which the approach frame (45) approaches the die that is opened, and so as to be able to define, in the captured image, a virtual plane (IP) including an image of an opening end surface of the die that is opened;
preparing a projected image obtained by projecting the attachment (48) onto the virtual plane (IP), or a maximum-dimension virtual projected image of the projected image, based on three-dimensional position information and three-dimensional shape information on the attachment (48) that is mounted to the approach frame (45); and
the image display device (55) displaying, on the display screen, the projected image or the maximum-dimension virtual projected image as is superposed on the captured image.

2. The teaching method for a system for taking out a molded product according to claim 1, wherein
the image display device (55) displays, on the virtual plane (IP), an indicator (IG) for determining a dimension ratio between the captured image and the projected image or the maximum-dimension virtual projected image together with the captured image.

3. The teaching method for a system for taking out a molded product according to claim 2, wherein
the indicator (IG) includes grid scales extending at constant intervals in a lateral direction and a vertical direction of the virtual plane (IP).

4. The teaching method for a system for taking out a molded product according to any one of claims 1 to 3, wherein
the teaching execution section (53) is configured to output an alarm signal to stop operation of the approach frame (45) if the projected image or the maximum-dimension virtual projected image (MPI) overlaps a part of the image of the opening end surface of the die that is opened, when the projected image or the maximum-dimension virtual projected image is displayed as is superposed on the captured image.

5. An apparatus for taking out a molded product, comprising:
a fixed frame (23);
a movable frame (27) movable along the fixed frame (23);
an approach frame (45) including an attachment such as a take-out head (48) and movably held on the movable frame (27) to go into a die (5.7.11) of a molding apparatus;
an operation control section (51) configured to move the movable frame (27) and the approach frame (45) according to a predetermined operation sequence to take out the molded product from the die of the molding apparatus with the die being opened, and to carry the molded product to a predetermined position and release the molded product;
an imaging device (49) disposed to capture an image of the die and around the die; and
an image display device (55) configured to display the captured image, which is captured by the imaging device (49), on a display screen of a display section (257, wherein:
the operation control section (51) includes a teaching execution section configured to enable an operator to execute teaching of the operation sequence by changing a position of the approach frame (45) while viewing the captured image displayed on the image display device (55);
the imaging device (49) is disposed so as to be able to capture an image of the die and around the die that is opened in a direction in which the approach frame (45) approaches the die that is opened, and so as to be able to define, in the captured image, a virtual plane (IP) including an image of an opening end surface of the die that is opened;
the image display device (55) includes a projected image preparation section configured to prepare a projected image obtained by projecting the attachment (48) onto the virtual plane (IP), or a maximum-dimension virtual projected image of the projected image, based on three-dimensional position information and three-dimensional shape information on the attachment (48) that is mounted to the approach frame (45); and
the image display device (55) is configured to display, on the display screen, the projected image or the maximum-dimension virtual projected image as is superposed on the captured image captured by the imaging device (49).

6. The system for taking out a molded product according to claim 5, wherein
the image display device (55) further includes an indicator display section configured to display, on the virtual plane (IP), an indicator (IG) for determining a dimension ratio between the captured image and the projected image or the maximum-dimension virtual projected image (MPI) together with the captured image.

7. The system for taking out a molded product according to claim 6, wherein
the indicator (IG) includes grid scales extending at constant intervals in a lateral direction and a vertical direction of the virtual plane. (IP)

8. The system for taking out a molded product according to any one of claims 5 to 7, wherein
the teaching execution section (53) is configured to output an alarm signal to stop operation of the approach frame (45) if the projected image or the maximum-dimension virtual projected image (MPI) overlaps a part of the image of the opening end surface of the die that is opened, when the projected image or the maximum-dimension virtual projected image is displayed on the display screen as is superposed on the captured image.

## Patentansprüche

1. Lehrverfahren für ein System zum Herausnehmen eines geformten Produkts, wobei das System umfasst:
einen festen Rahmen (23);
einen bewegbaren Rahmen (27), der entlang des festen Rahmens (23) bewegbar ist,
einen Annäherungs-Rahmen (45), der eine Anbringung wie zum Beispiel einen Herausnahme Kopf (48) umfasst und bewegbar an dem bewegbaren Rahmen (27) gehalten ist, um in eine Matrize (5,7,11) eines Formgeräts einzutreten;
einen Operationssteuerabschnitt (51), der dazu konfiguriert ist, den bewegbaren Rahmen (27) und den Annäherungs-Rahmen (45) gemäß einer vorbestimmten Operationssequenz zu bewegen, um das geformte Produkt aus der Matrize des Formgeräts bei geöffneter Matrize zu entnehmen, und das geformte Produkt zu einer vorbestimmten Position zu tragen und das geformte Produkt loszulassen;
eine Bildgebungsvorrichtung (49), die dazu ausgelegt ist, ein Bild der Matrize und um die Matrize herum aufzunehmen; und
eine Bildanzeigevorrichtung (55), die dazu konfiguriert ist, das aufgenommene Bild, das durch die Bildgebungsvorrichtung (49) aufgenommen ist, auf einem Anzeigebildschirm eines Anzeigeabschnitts (57) anzuzeigen,
wobei der Operationssteuerabschnitt (51) einen Lehrausführungsabschnitt umfasst, der dazu konfiguriert ist, einem Bediener einer Ausführung einer Leere der Operationssequenz zu ermöglichen durch Ändern einer Position des AnnäherungsRahmens (45) während einer Betrachtung des aufgenommenen Bilds, das auf der Bildanzeigevorrichtung (55) angezeigt wird, **dadurch gekennzeichnet, dass**:
das Lehrverfahren umfasst:
Anordnen der Bildgebungsvorrichtung (49) derart, dass ein Bild der Matrize und um die Matrize herum in einer Richtung aufgenommen werden kann, in der sich der Annäherungs-Rahmen (45) der Matrize annähert, die geöffnet ist, und derart, dass in dem aufgenommenen Bild eine virtuelle Ebene (IP) definiert werden kann, die ein Bild einer Öffnungsendoberfläche der Matrize enthält, die geöffnet ist,
Präparieren eines Projektionsbildes, erhalten durch Projizieren der Anbringung (48) auf die virtuelle Ebene (IP), oder eines virtuellen Projektionsbildes mit maximaler Abmessung des Projektionsbildes basierend auf dreidimensionalen Positionsinformationen und dreidimensionalen Gestaltsinformationen auf der Anbringung (48), die an dem Annäherungs-Rahmen (45) montiert ist, und
wobei die Bildanzeigevorrichtung (55) auf dem Anzeigebildschrim das Projektionsbild oder das virtuelle Projektionsbild mit maximaler Abmessung überlagert auf dem aufgenommenen Bild anzeigt.

2. Lehrverfahren für ein System zum Herausnehmen eines geformten Produkts nach Anspruch 1, wobei
die Bildanzeigevorrichtung (55) auf der virtuellen Ebene (IP) einen Indikator (IG) anzeigt zum Bestimmen eines Abmessungsverhältnisses zwischen dem aufgenommenen Bild und dem Projektionsbild oder dem virtuellen Projektionsbild mit maximaler Abmessung zusammen mit dem aufgenommenen Bild.

3. Lehrverfahren für ein System zum Herausnehmen eines geformten Produkts nach Anspruch 2, wobei
der Indikator (IG) Gitterskalen enthält, die sich in konstanten Intervallen in einer lateralen Richtung und einer vertikalen Richtung der virtuellen Ebene (IP) erstrecken.

4. Lehrverfahren für ein System zum Herausnehmen eines geformten Produkts nach einem der Ansprüche 1-3, wobei
der Lehrausführungsabschnitt (53) dazu konfiguriert ist, ein Alarmsignal zum Stoppen einer Operation des Annäherungs-Rahmens (45) auszugeben, wenn das Projektionsbild oder das virtuelle Projektionsbild mit maximaler Abmessung (MPI) einen Teil des Bilds der Öffnungsendoberfläche der Matrize, die geöffnet ist, überlappt, wenn das Projektionsbild oder das virtuelle Projektionsbild mit maximaler Abmessung überlagert auf dem aufgenommenen Bild angezeigt wird.

5. Gerät zum Herausnehmen eines geformten Produkts, umfassend:
einen festen Rahmen (23);
einen bewegbaren Rahmen (27), der entlang des festen Rahmens (23) bewegbar ist,
einen Annäherungs-Rahmen (45), der eine Anbringung wie zum Beispiel einen Herausnahme Kopf (48) umfasst und bewegbar an dem bewegbaren Rahmen (27) gehalten ist, um in eine Matrize (5,7,11) eines Formgeräts einzutreten;
einen Operationssteuerabschnitt (51), der dazu konfiguriert ist, den bewegbaren Rahmen (27) und den Annäherungs-Rahmen (45) gemäß einer vorbestimmten Operationssequenz zu bewegen, um das geformte Produkt aus der Matrize des Formgeräts bei geöffneter Matrize zu entnehmen, und das geformte Produkt zu einer vorbestimmten Position zu tragen und das geformte Produkt loszulassen;
eine Bildgebungsvorrichtung (49), die dazu ausgelegt ist, ein Bild der Matrize und um die Matrize herum aufzunehmen; und
eine Bildanzeigevorrichtung (55), die dazu konfiguriert ist, das aufgenommene Bild, das durch die Bildgebungsvorrichtung (49) aufgenommen ist, auf einem Anzeigebildschirm eines Anzeigeabschnitts (57) anzuzeigen,
wobei der Operationssteuerabschnitt (51) einen Lehrausführungsabschnitt umfasst, der dazu konfiguriert ist, einem Bediener eine Ausführung einer Lehre der Operationssequenz zu ermöglichen durch Ändern einer Position des AnnäherungsRahmens (45) während einer Betrachtung des aufgenommenen Bilds, das auf der Bildanzeigevorrichtung (55) angezeigt wird,
wobei die Bildgebungsvorrichtung (49) derart angeordnet ist, dass ein Bild der Matrize und um die Matrize herum, die geöffnet ist, in einer Richtung aufgenommen werden kann, in der sich der Annäherungs-Rahmen (45) der Matrize, die geöffnet ist, annähert, und derart, dass in dem aufgenommenen Bild eine virtuelle Ebene (IP) definiert werden kann, die ein Bild einer Öffnungsendoberfläche der Matrize, die geöffnet ist, enthält,
wobei die Bildanzeigevorrichtung (55) einen Projektionsbildpräperationsabschnitt umfasst, der dazu konfiguriert ist, ein Projektionsbild zu präparieren, erhalten durch Projizieren der Anbringung (48) auf die virtuelle Ebene (IP), oder ein virtuelles Projektionsbild mit maximaler Abmessung des Projektionsbildes, basierend auf dreidimensionalen Positionsinformationen und dreidimensionalen Gestaltsinformationen auf der Anbringung (48), die an dem Annäherungs-Rahmen (45) montiert ist, und
wobei die Bildanzeigevorrichtung (55) dazu konfiguriert ist, auf dem Anzeigebildschrim das Projektionsbild oder das virtuelle Projektionsbild mit maximaler Abmessung überlagert auf dem aufgenommenen Bild anzuzeigen, dass durch die Abbildungsvorrichtung (49) aufgenommen ist.

6. System zum Herausnehmen eines geformten Produkts nach Anspruch 5, wobei die Bildanzeigevorrichtung (55) ferner einen Indikatoranzeigeabschnitt umfasst, der dazu konfiguriert ist, auf der virtuellen Ebene (IP) einen Indikator (IG) anzuzeigen zum Bestimmen eines Abmessungsverältnisses zwischen dem aufgenommenen Bild und dem Projektionsbild oder dem virtuellen Projektionsbild mit maximaler Abmessung (MPI) zusammen mit dem aufgenommenen Bild.

7. System zum Herausnehmen eines geformten Produkts nach Anspruch 6, wobei
der Indikator (IG) Gitterskalen enthält, die sich in konstanten Intervallen in einer lateralen Richtung und einer vertikalen Richtung der virtuellen Ebene (IP) erstrecken.

8. System zum Herausnehmen eines geformten Produkts nach einem der Ansprüche 1-7, wobei
der Lehrausführungsabschnitt (53) dazu konfiguriert ist, ein Alarmsignal zum Stoppen einer Operation des Annäherungsrahmens (45) auszugeben, wenn das Projektionsbild oder das virtuelle Projektionsbild mit maximaler Abmessung (MPI) einen Teil des Bilds der Öffnungsendoberfläche der Matrize, die geöffnet ist, überlappt, wenn das Projektionsbild oder das virtuelle Projektionsbild mit maximaler Abmessung überlagert auf dem aufgenommenen Bild angezeigt wird.

## Revendications

1. Procédé d'enseignement pour un système de démoulage d'un produit moulé, le système comprenant :
un châssis (23) fixe ;
un châssis (27) mobile mobile le long du châssis (23) fixe ;
un châssis (45) d'approche ayant une fixation telle qu'une tête (48) de démoulage et retenu de manière mobile sur le châssis (27) mobile pour venir dans un moule (5, 7, 11) d'une installation de moulage ;
une partie (51) de contrôle de fonctionnement configurée pour déplacer le châssis (27) mobile et le châssis (45) d'approche, suivant une séquence de fonctionnement déterminée à l'avance pour sortir le produit moulé du moule de l'installation de moulage, alors que le moule est ouvert, et pour mettre le produit moulé en une position déterminée à l'avance et relâcher le produit moulé ;
un dispositif (49) d'imagerie disposé pour prendre une image du moule et autour du moule ; et
un dispositif (55) d'affichage d'image configuré pour afficher l'image prise, qui est prise dans le dispositif (49) d'imagerie, sur un écran d'affichage d'une partie (57) d'affichage ;
la partie (51) de commande du fonctionnement comprenant une partie d'exécution d'enseignement configurée pour permettre à un opérateur d'exécuter un enseignement de la séquence de fonctionnement en changeant une position du châssis (45) d'approche, tout en visualisant l'image prise affichée sur le dispositif (55) d'image, **caractérisé en ce que** :
le procédé d'enseignement comprend :
disposer le dispositif (49) d'imagerie, de manière à pouvoir prendre une image du moule et autour du moule dans une direction, dans laquelle le châssis (45) d'approche se rapproche du moule, qui est ouvert, et de manière à définir, dans l'image prise, un plan (IP) virtuel incluant une image d'une surface d'extrémité d'ouverture du moule qui est ouvert ;
préparer une image projetée, obtenue en projetant la fixation (48) sur le plan (IP) virtuel, ou une image projetée virtuelle de dimension maximum de l'image projetée, sur la base d'une information de position en trois dimensions et d'une information de forme en trois dimensions sur la fixation (48), qui est montée sur le châssis (45) d'approche ; et
le dispositif (55) d'affichage d'image affichant, sur l'écran d'affichage, l'image projetée ou l'image projetée virtuelle de dimension maximum telle qu'elle est superposée à l'image prise.

2. Procédé d'enseignement pour un système de démoulage d'un produit moulé suivant la revendication 1, dans lequel
le dispositif (55) d'affichage d'image affiche, sur le plan (IP) virtuel, un indicateur (IG) pour déterminer un rapport de dimension entre l'image prise et l'image projetée ou l'image projetée virtuelle de dimension maximum ensemble avec l'image prise.

3. Procédé d'enseignement pour un système de démoulage d'un produit moulé suivant la revendication 2, dans lequel
l'indicateur (IG) comprend des échelles de grille s'étendant à des intervalles constants dans une direction latérale et une direction verticale du plan (IP) virtuel.

4. Procédé d'enseignement pour un système de démoulage d'un produit moulé suivant l'une quelconque des revendications 1 à 3, dans lequel
la partie (53) d'exécution d'un enseignement est configurée pour sortir un signal d'alerte pour arrêter le fonctionnement du châssis (45) d'approche, si l'image projetée ou l'image (MPI) projetée virtuelle de dimension maximum chevauche une partie de l'image de la surface d'extrémité d'ouverture du moule qui est ouvert, lorsque l'image projetée ou l'image projetée virtuelle de dimension maximum est affichée, telle qu'elle est superposée à l'image prise.

5. Installation de démoulage d'un produit moulé, comprenant :
un châssis (23) fixe ;
un châssis (27) mobile mobile le long du châssis (23) fixe ;
un châssis (45) d'approche ayant une fixation telle qu'une tête (48) de démoulage et retenu de manière mobile sur le châssis (27) mobile pour venir dans un moule (5, 7, 11) d'une installation de moulage ;
une partie (51) de contrôle de fonctionnement configurée pour déplacer le châssis (27) mobile et le châssis (45) d'approche, suivant une séquence de fonctionnement déterminée à l'avance pour sortir le produit moulé du moule de l'installation de moulage, alors que le moule est ouvert, et pour mettre le produit moulé en une position déterminée à l'avance, et relâcher le produit moulé ;
un dispositif (49) d'imagerie étant disposé pour prendre une image du moule et autour du moule ; et
un dispositif (55) d'affichage d'image configuré pour afficher l'image prise, qui est prise dans le dispositif (49) d'imagerie, sur un écran d'affichage d'une partie (57) d'affichage ;
la partie (51) de commande du fonctionnement comprenant une partie d'exécution d'enseignement configurée pour permettre à un opérateur d'exécuter un enseignement de la séquence de fonctionnement en changeant une position du châssis (45) d'approche, tout en visualisant l'image prise affichée sur le dispositif (55) d'image ;
le dispositif (49) d'imagerie étant disposé de manière à pouvoir prendre un image du moule et autour du moule, qui est ouvert, dans une direction, dans laquelle le châssis (45) d'approche s'approche du moule, qui est ouvert, et de manière à pouvoir définir, dans l'image prise, un plan (IP) virtuel, comprenant une image d'une surface d'extrémité ouverte du moule, qui est ouvert ;
le dispositif (55) d'affichage d'image comprend une partie de préparation d'image projetée, configurée pour préparer une image projetée obtenue en projetant la fixation (48) sur le plan (IP) virtuel ou une image projetée virtuelle de dimension maximum de l'image projetée sur la base d'une information de position en trois dimensions et d'une information de forme en trois dimensions, sur la fixation (48), qui est montée sur le châssis (45) d'approche ;
le dispositif (55) d'affichage d'image est configuré pour afficher, sur l'écran d'affichage, l'image projetée ou l'image projetée virtuelle de dimension maximum, telle qu'elle est superposée à l'image prise par le dispositif (49) d'imagerie.

6. Système de démoulage d'un produit moulé suivant la revendication 5, dans lequel
le dispositif (55) d'affichage d'image comprend en outre une partie d'affichage d'un indicateur configuré pour afficher, sur le plan (IP) virtuel, un indicateur (IG) pour déterminer un rapport de dimension entre l'image prise et l'image projetée ou l'image (MPI) projetée virtuelle de dimension maximum ensemble avec l'image prise.

7. Système de démoulage d'un produit moulé suivant la revendication 6, dans lequel
l'indicateur (IG) comprend des échelles de grille s'étendant à des intervalles constants dans une direction latérale et une direction verticale du plan (IP) virtuel.

8. Système de démoulage d'un produit moulé suivant l'une quelconque des revendications 5 à 7, dans lequel
la partie (53) d'exécution d'un enseignement est configurée pour sortir un signal d'alerte pour arrêter le fonctionnement du châssis (45) d'approche, si l'image projetée ou l'image (MPI) projetée virtuelle de dimension maximum chevauche une partie de l'image de la surface d'extrémité d'ouverture du moule qui est ouvert, lorsque l'image projetée ou l'image projetée virtuelle de dimension maximum est affichée, telle qu'elle est superposée à l'image prise.
